# FASCICULE DE BREVET EUROPEEN

(11) **EP 0 838 870 B1**
(45) Date de publication et mention de la délivrance du brevet: **06.12.2000**
(21) Numéro de dépôt: 97402510.8
(22) Date de dépôt: 23.10.1997
(51) Int. Cl.: H01M 4/24, H01M 4/62

(54) **Electrode hydrophile pour générateur électrochimique alcalin et son procédé de fabrication**
Hydrophile Elektrode eines alkalischen Akkumulators und Verfahren zur Herstellung
Hydrophylic electrode for alkaline accumulator and method of preparation

(30) Priorité: 24.10.1996 FR 9612974
(43) Date de publication de la demande: 29.04.1998
(73) Titulaire: SAFT, F-93230 Romainville (FR)
(72) Inventeur: Senyarich, Stéphane, 16600 Mornac (FR); Cocciantelli, Jean-Michel, 33300 Bordeaux (FR)
(74) Mandataire: Laroche, Danièle

(56) Documents cités:
- US-A- 4 339 512
- PATENT ABSTRACTS OF JAPAN vol. 008, no. 123 (E-249), 8 juin 1984 & JP 59 035360 A (SANYO DENKI KK), 27 février 1984,

## Description

La présente invention concerne une électrode pour générateur électrochimique alcalin, notamment une électrode à base d'un métal hydrurable et son procédé de fabrication. Elle concerne également le générateur en faisant application.

On sait que les générateurs électrochimiques comprennent deux électrodes de polarité opposée entre lesquelles est placé un séparateur. Le fonctionnement des générateurs électrochimiques alcalins est basé sur les réactions d'oxydo-réduction des électrodes. La surface électrochimiquement active d'une électrode dépend de la surface mouillée par l'électrolyte. Si l'électrode est insuffisamment mouillée, la surface active est réduite ce qui entraîne une augmentation de la densité de courant local et donc une plus faible capacité chargée. Pour obtenir de bonnes performances en accumulateur, il faut que les électrodes soient parfaitement irriguées par l'électrolyte.

Or, les électrodes négatives utilisées usuellement dans les générateurs alcalins présentent une hydrophilie insuffisante, notamment les électrodes négatives à base d'un métal hydrurable mais également, les électrodes négatives d'accumulateurs NiCd. En outre, l'assèchement des électrodes négatives est accentuée par la corrosion des électrodes, ce qui conduit à la formation d'une couche dite de passivation qui absorbe une partie de l'électrolyte.

Différentes solutions sont connues pour augmenter l'hydrophilie des électrodes à base d'un métal hydrurable. Un agent hydrophile est généralement ajouté à la matière active de l'électrode.

Il est connu par exemple d'incorporer un polymère hydrophile dans la matière active de l'électrode. Cette solution est néanmoins temporaire car le polymère finit par se dégrader dans l'électrolyte alcalin et l'électrode négative perd alors ses propriétés hydrophiles.

Le document JP 0622 38 22 divulgue l'utilisation de fibres hydrophiles en polyoléfine incorporées dans ladite pâte. L'hydrophilie de l'électrode est améliorée mais reste très insuffisante. De plus, l'électrode obtenue est très friable à la découpe.

La présente invention concerne une électrode négative d'un générateur électrochimique alcalin comprenant un collecteur de courant et une pâte comportant au moins une matière active et un agent hydrophile constitué de petits éléments organiques munis d'au moins un groupement hydrophile.

Une telle électrode est connue du document JP 33335-68. Dans cette réalisation les petits éléments sont constitués de billes poreuses de diamètre de l'ordre de 100 microns (1 micron = 1 micromètre = 1 µm = 1 ·10⁻⁶ m). L'hydrophilie de l'électrode obtenue reste insuffisante ; de plus la tenue mécanique de l'électrode n'est pas satisfaisante.

La présente électrode selon l'invention est caractérisée en ce que les petits éléments sont en polyoléfine et ont une forme de bâtonnets sensiblement cylindriques, le diamètre moyen des bâtonnets étant inférieur à 20 microns, de préférence inférieur à 10 microns, et leur longueur moyenne inférieure à 50 microns.

Cette électrode présente une très bonne hydrophilie qui se maintient avec le temps ainsi qu'une bonne tenue mécanique. Elle n'est pas friable à la découpe.

Selon une réalisation préférentielle, les bâtonnets ont un diamètre moyen inférieur à 5 microns et une longueur moyenne inférieure à 20 microns.

La proportion d'agent hydrophile est, de préférence, comprise entre 0,3 et 3 % en poids de la pâte.

L'invention concerne également le générateur électrochimique alcalin comprenant une électrode positive au nickel et une électrode négative selon l'invention et un électrolyte aqueux.

Par ailleurs, l'adjonction de l'agent hydrophile selon l'invention permet de diminuer l'autodécharge du générateur et d'améliorer la tenue mécanique des électrodes utilisées.

La présente invention concerne également le procédé de fabrication de ladite électrode. Ce procédé comprend les étapes suivantes :
- préparation d'une pâte comprenant la matière active de l'électrode et un agent hydrophile,
- application de ladite pâte sur le collecteur de courant,
- séchage.

L'agent hydrophile de l'invention est obtenu par fragmentation de fibres de polyoléfine d'un diamètre moyen inférieur à 20 microns et dont la longueur moyenne est supérieure à 1000 microns afin d'obtenir des bâtonnets d'un diamètre moyen inférieur à 20 microns, de préférence inférieur à 15 microns, et d'une longueur moyenne inférieure à 50 microns. Le matériau de ces fibres est par exemple une polyoléfine dont le nombre de carbones du monomère correspondant est inférieur à 5. Il s'agit de préférence du polyéthylène ou du polypropylène, et de façon encore plus préférée du polypropylène.

Selon une réalisation préférentielle de l'invention, le diamètre moyen desdites fibres est inférieur à 5 microns.

Selon le procédé de l'invention, l'agent hydrophile est obtenu par oxydation. L'oxydation permet d'une part de fragmenter les fibres en de petits bâtonnets d'une longueur moyenne inférieure à 50 microns et d'autre part de munir les petits bâtonnets de groupements hydrophiles notamment à leur surface. L'oxydation des fibres peut être obtenue par tout procédé connu de l'homme du métier, tel que par exemple un procédé choisi parmi un traitement thermique, chimique, par radio oxydation ou par photo-oxydation. Le groupement hydrophile obtenu est un groupement carboxylique. Les fibres peuvent être préalablement greffées par au moins un groupement hydrophile avant de subir l'oxydation, par exemple par un groupement carboxylique ou sulfonique.

L'invention sera mieux comprise et d'autres avantages et particularités apparaîtront à la lecture des exemples suivants, donnés à titre illustratif et non limitatif et dans lesquels :
- les exemples 1 à 4 illustrent les caractéristiques des électrodes de l'art antérieur,
- l'exemple 5 illustre les caractéristiques d'une électrode de l'invention.

Les exemples sont illustrés par les figures 1 à 4.

La figure 1 est un cliché SEM (Microscopie Electronique à Balayage (MEB) soit "Scanning Electrode Microscope" en anglais) en électrons rétrodiffusés (grossissement 500) des fibres de polypropylène non oxydées de l'exemple 5.

La figure 3 représente le spectre infrarouge desdites fibres de polypropylène non oxydées de l'exemple 5, avec en abscisse la longueur d'onde (en cm⁻¹) et en ordonnée l'absorbance (sans unité).

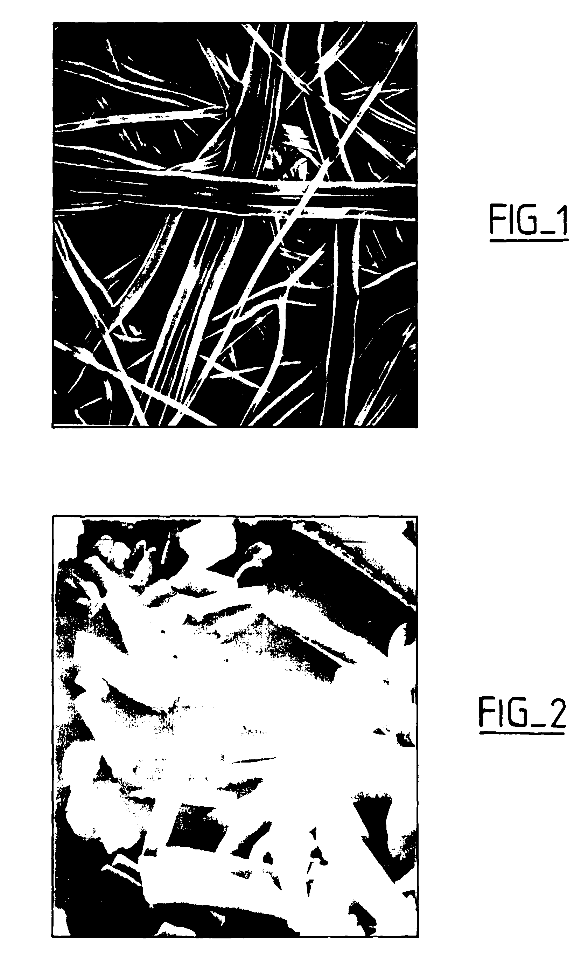

La figure 2 est un cliché SEM (Microscopie Electronique à Balayage (MEB) soit "Scanning Electrode Microscope" en anglais) en électrons rétrodiffusés (grossissement 1200) des particules oxydées selon l'invention de l'exemple 5.

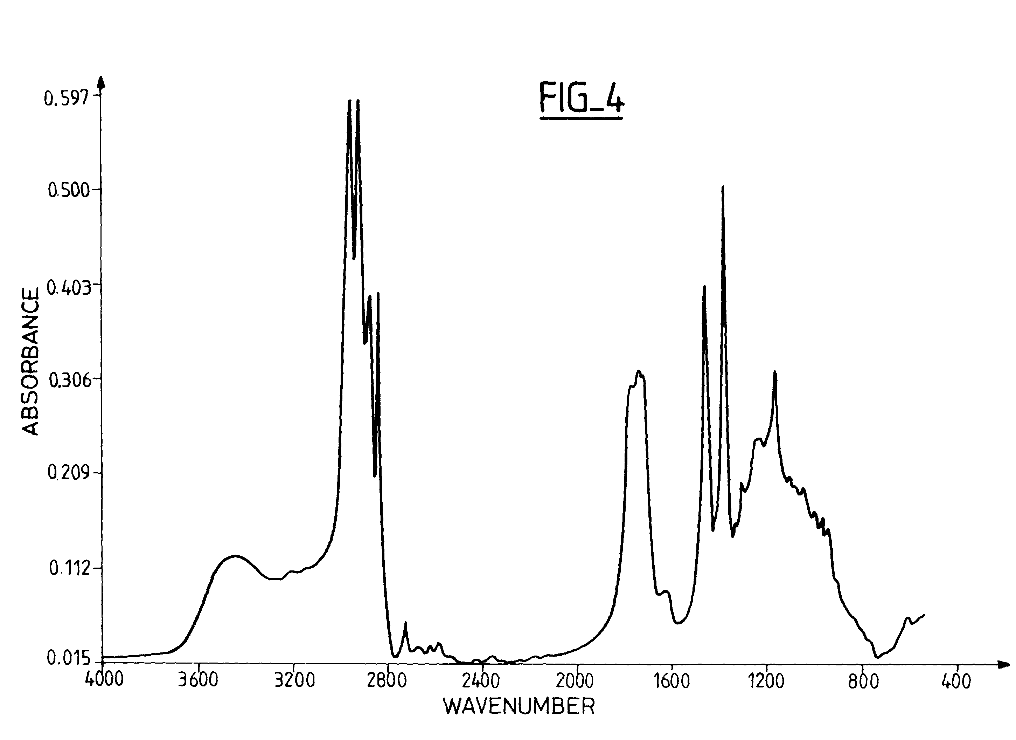

La figure 4 représente le spectre infrarouge desdites particules oxydées selon l'invention de l'exemple 5, avec en abscisse la longueur d'onde (en cm⁻¹) et en ordonnée l'absorbance (sans unité).

On teste les électrodes de l'art antérieur et selon l'invention en ce qui concerne les caractéristiques suivantes :
- l'hydrophilie,
- la tenue mécanique,
- la durée de vie de l'accumulateur.

L'hydrophilie est quantifiée en mesurant le pourcentage d'électrolyte absorbé par l'électrode. En particulier, l'électrode est laissée quatre heures à température ambiante dans une solution d'électrolyte puis égouttée. L'électrolyte utilisé est une solution de potasse, dont la concentration est de 8,5 M. On définit l'absorption d'électrolyte en calculant la différence de masse entre l'électrode négative sèche et cette même électrode ayant trempé dans l'électrolyte, puis en divisant cette valeur par la masse de l'électrode négative sèche. On considère qu'une électrode est hydrophile si le taux d'absorption d'électrolyte est supérieur à 4 %.

On mesure la tenue mécanique par le test dit de chute. Une électrode de 4 x 6 cm² est laissée tomber 10 fois de suite sur une face, en alternant les faces (5 tests de chute sur chaque face). La hauteur de chute est de 50 cm. On mesure la perte de poids qui en résulte, en pourcentage. On considère qu'une électrode a une bonne tenue mécanique si sa perte de masse est inférieure à 0,5 %.

### Exemple 1

On fabrique de façon classique une électrode négative pour accumulateur Ni-MH en appliquant une pâte sur une mousse ou un feuillard de nickel. Cette pâte contient :
- un alliage hydrurable,
- un dispersant,
- un liant,
- du carbone.

On réalise l'accumulateur Ni-MH en associant à l'électrode négative une électrode positive dont la matière active introduite est de l'hydroxyde de nickel, un séparateur en polyamide, un électrolyte ternaire constitué d'un mélange aqueux de potasse KOH, de soude NaOH et de lithine LiOH. L'électrode négative ne contient aucun agent hydrophile.

Les résultats sont regroupés dans le tableau I.

On observe une bonne tenue mécanique de l'électrode mais une hydrophilie et une durée de vie du générateur faibles (absorption d'électrolyte inférieure à 3 % et durée de vie de 500 cycles).

### Exemple 2

On réalise un accumulateur comme décrit dans l'exemple 1 en remplaçant l'électrode négative de l'exemple 1 par une électrode négative dont la matière active est un alliage hydrurable et à laquelle on ajoute un polymère hydrophile (carboxy-méthyl-cellulose). Sa proportion massique au sein de la pâte est de 1 %.

Les résultats sont donnés dans le tableau I.

On observe une bonne tenue mécanique et une bonne hydrophilie de l'électrode. Cependant, la durée de vie du générateur n'est pas satisfaisante (nombre de cycles < 700). Ce résultat indique que le polymère hydrophile s'est détérioré en cours de cyclage et n'assure plus une bonne hydrophilie de l'électrode négative.

### Exemple 3

On réalise un accumulateur comme décrit dans l'exemple 1 en remplaçant l'électrode négative de l'exemple 1 par une électrode négative dont la matière active est un alliage hydrurable et à laquelle on ajoute des billes polymères greffées par des fonctions hydrophiles commercialisées sous le nom de « DOWEX 50-WX8-250-400 » par Dow Chemical. Leur diamètre moyen est d'environ 100 µm et leur proportion massique au sein de la pâte est de 1 %.

Les résultats sont donnés dans le tableau I.

On observe une durée de vie satisfaisante de l'accumulateur mais avec une hydrophilie médiocre. De plus, la tenue mécanique de l'électrode est très mauvaise (perte de masse supérieure à 0,5 %).

### Exemple 4

On réalise un accumulateur comme décrit dans l'exemple 1 en remplaçant l'électrode négative de l'exemple 1 par une électrode négative dont la matière active est un alliage hydrurable et à laquelle on ajoute des fibres hydrophiles, dont la longueur moyenne est d'environ 2 mm (2000 µm), dont le diamètre moyen est d'environ 15 µm, et dont la proportion massique au sein de la pâte est de 1 %.

Les résultats sont donnés dans le tableau I.

La durée de vie du générateur est satisfaisante mais l'hydrophilie de l'électrode est médiocre.

### Exemple 5

On réalise un accumulateur comme décrit dans l'exemple 1 en remplaçant l'électrode négative de l'exemple 1 par une électrode négative dont la matière active est un alliage hydrurable et à laquelle on ajoute des particules oxydées qui sont des petits bâtonnets de polypropylène oxydé de diamètre moyen 4 µm et de longueur moyenne 15 µm. La proportion massique de ces particules oxydées au sein de la pâte est de 1 %.

Ces bâtonnets sont synthétisés à partir de fibres de polypropylène non tissé elles-mêmes obtenues par la technologie dénommée "melt - blown" en anglais, bien connue de l'homme du métier. Lesdites fibres de polypropylène ont un diamètre moyen de 4 µm et ont généralement une longueur moyenne supérieure à 1000µm.

La figure 1 est un cliché SEM (grossissement 500) desdites fibres de polypropylène non oxydées. On y voit que les fibres sont longues (au moins plus de 200 µm).

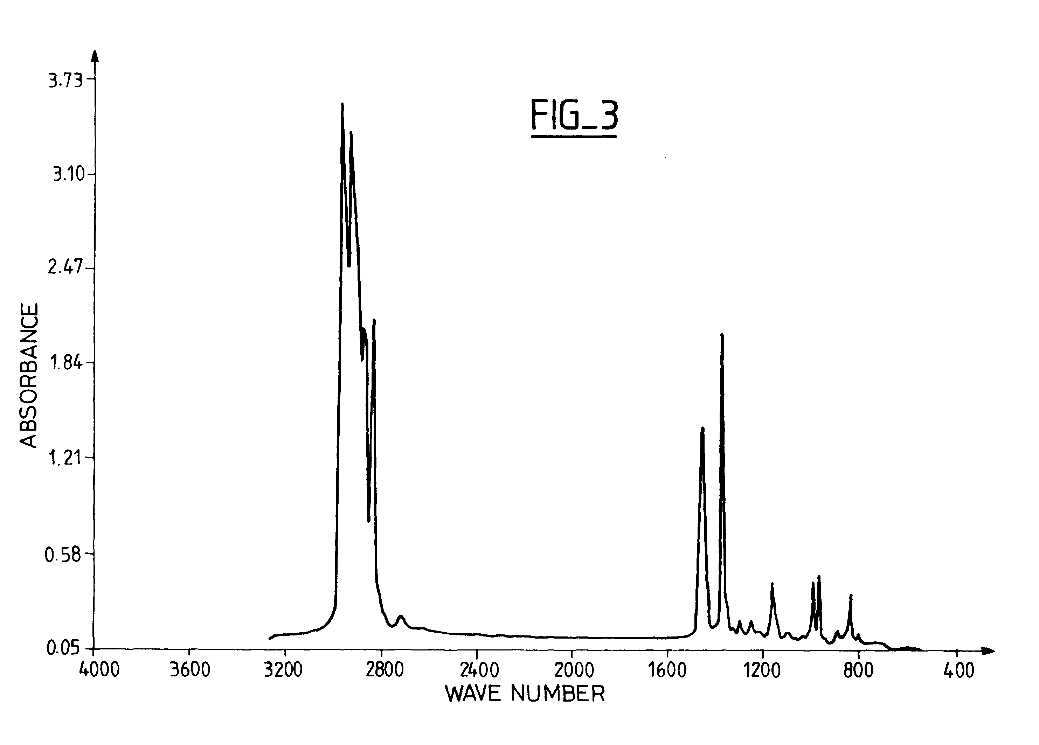

La figure 3 représente le spectre infrarouge desdites fibres de polypropylène non oxydées, avec en abscisse la longueur d'onde (en cm⁻¹) et en ordonnée l'absorbance (sans unité).

Les petits bâtonnets sont synthétisés à partir desdites fibres par un procédé d'oxydation thermique, à 145°C pendant 12 heures. Ils sont en polypropylène oxydé, avec un diamètre moyen égal à 4 µm et une longueur moyenne égale à 15 µm.

La figure 2 est un cliché SEM (grossissement 1200) des particules oxydées selon l'invention. On y voit par rapport à la figure 1 que les particules sont beaucoup plus courtes (de 4 à 30 µm).

La figure 4 représente le spectre infrarouge desdites particules oxydées, avec en abscisse la longueur d'onde (en cm⁻¹) et en ordonnée l'absorbance (sans unité). On voit apparaître des bandes d'absorption à 1730 cm⁻¹ (respectivement à 3400 cm⁻¹) qui sont caractéristiques des liaisons C=O (respectivement O-H) des fonctions acide carboxylique synthétisées par oxydation.

Les résultats sont donnés dans le tableau I.

On observe une très bonne hydrophilie ainsi qu'une durée de vie et une tenue mécanique très satisfaisantes.

**TABLEAU I**

| Paramètres | Exemple 1 | Exemple 2 | Exemple 3 | Exemple 4 | Exemple 5 |
|---|---|---|---|---|---|
| Agent hydrophile | Néant | Polymère hydrophile | Billes hydrophiles | Fibres hydrophiles | Bâtonnets hydrophiles |
| Absorption électrolyte (%) | 1,8 | 5,9 | 3,2 | 3,9 | 8,9 |
| Test de chute | | | | | |
| Perte de masse (%) | 0,38 | 0,37 | 1,20 | 0,38 | 0,43 |
| Durée de vie | | | | | |
| (Cycles) | 500 | 550 | 700 | 700 | 850 |

Bien entendu, la présente invention n'est pas limitée aux modes de réalisation décrits mais elle est susceptible de nombreuses variantes accessibles à l'homme du métier. En particulier, on pourra sans sortir du cadre de l'invention faire varier la composition de la pâte et y introduire des additifs connus de l'homme du métier.

## Revendications

1. Electrode négative d'un générateur électrochimique alcalin comprenant un collecteur de courant et une pâte comportant au moins une matière active et un agent hydrophile constitué de petits éléments organiques munis d'au moins un groupement hydrophile caractérisée en ce que les petits éléments sont en polyoléfine et ont une forme de bâtonnets sensiblement cylindriques, le diamètre moyen des bâtonnets étant inférieur à 20 µm et leur longueur moyenne inférieure à 50 µm.

2. Electrode négative selon la revendication 1 tel que le diamètre moyen des bâtonnets est inférieur à 15 microns.

3. Electrode négative selon l'une des revendications 1 ou 2 telle que les bâtonnets ont une longueur moyenne inférieure à 20 µm et un diamètre moyen inférieur à 5 µm.

4. Electrode négative selon l'une des revendications 1 à 3 telle que la proportion d'agent hydrophile est comprise entre 0,3 et 3 % en poids de la pâte.

5. Electrode négative selon l'une des revendications précédentes telle que la matière active de l'électrode est hydrurable.

6. Electrode négative selon l'une des revendications précédentes telle que le groupement hydrophile est un acide carboxylique.

7. Electrode négative selon l'une des revendications précédentes telle que les bâtonnets sont en polyéthylène ou en polypropylène.

8. Electrode négative selon l'une des revendications précédentes telle que les bâtonnets sont en polypropylène.

9. Procédé de fabrication d'une électrode de générateur alcalin, caractérisé en ce qu'on fabrique des bâtonnets hydrophiles en oxydant des longues fibres de polyoléfine de diamètre moyen inférieur à 20 µm, on mélange les bâtonnets avec une pâte comprenant une matière active et on l'applique sur un collecteur de courant.

10. Procédé selon la revendication 9, caractérisé en ce que la matière active est hydrurable.

11. Procédé selon l'une des revendications 9 ou 10, caractérisé en ce qu'avant de procéder à l'oxydation des fibres on les greffe par au moins un groupement hydrophile.

12. Procédé selon la revendication 11 tel que ledit groupement hydrophile est un groupement carboxylique ou un groupement sulfonique.

## Patentansprüche

1. Negative Elektrode eines alkalischen elektrochemischen Generators mit einem Stromkollektor und einer Paste, die wenigstens ein aktives Material und ein aus kleinen organischen, mit wenigstens einer hydrophilen Gruppe ausgestatteten, Elementen gebildetes hydrophiles Mittel umfasst,
**dadurch gekennzeichnet, dass** die kleinen Elemente aus Polyolefin bestehen und eine im Wesentlichen zylindrische Stäbchenform haben, wobei der mittlere Durchmesser der Stäbchen unterhalb von 20 µm und ihre mittlere Länge unterhalb von 50 µm liegt.

2. Negative Elektrode nach Anspruch 1, bei welcher der mittlere Durchmesser der Stäbchen unterhalb von 15 µm liegt.

3. Negative Elektrode nach einem der Ansprüche 1 oder 2, bei welcher die Stäbchen eine mittlere Länge unterhalb von 20 µm und einen mittleren Durchmesser unterhalb von 5 µm haben.

4. Negative Elektrode nach einem der Ansprüche 1 bis 3, bei welcher der Anteil des hydrophilen Stoffs zwischen 0,3 und 3 Gewichtsprozent der Paste beträgt.

5. Negative Elektrode nach einem der vorhergehenden Ansprüche, bei welcher das aktive Material der Elektrode hydridisierbar ist.

6. Negative Elektrode nach einem der vorhergehenden Ansprüche, bei welcher die hydrophile Gruppe eine Carboxylsäure ist.

7. Negative Elektrode nach einem der vorhergehenden Ansprüche, bei welcher die Stäbchen aus Polyethylen oder aus Polypropylen bestehen.

8. Negative Elektrode nach einem der vorhergehenden Ansprüche, bei welcher die Stäbchen aus Polypropylen bestehen.

9. Verfahren zur Herstellung einer alkalischen Generatorelektrode,
**dadurch gekennzeichnet, dass** die hydrophilen Stäbchen durch die Oxidation von langen Polyolefinfasern mit einem mittleren Durchmesser unterhalb von 20 µm hergestellt werden, die Stäbchen mit einer ein aktives Material enthaltenden Paste gemischt werden, und dieses auf einen Stromkollektor aufgebracht wird.

10. Verfahren nach Anspruch 9,
**dadurch gekennzeichnet, dass** das aktive Material hydridisierbar ist.

11. Verfahren nach einem der Ansprüche 9 oder 10,
**dadurch gekennzeichnet, dass** die Fasern vor ihrer Oxidation mit wenigstens einer hydrophilen Gruppe veredelt werden.

12. Verfahren nach Anspruch 11, bei welchem die genannte hydrophile Gruppe eine Carboxylgruppe oder eine Sulfogruppe ist.

## Claims

1. A negative electrode for an alkaline electrochemical cell, the electrode comprising a current collector and a paste including at least one active material and a hydrophilic agent constituted by small organic elements provided with at least one hydrophilic group, the electrode being characterized in that the small elements are of polyolefin and are in the form of substantially cylindrical rods, having a mean diameter of less than 20 µm and a mean length of less than 50 µm.

2. A negative electrode according to claim 1, in which the mean diameter of the rods is less than 15 microns.

3. A negative electrode according to claim 1 or 2, in which the rods have a mean length of less than 20 µm and a mean diameter of less than 5 µm.

4. A negative electrode according to any one of claims 1 to 3, in which the proportion of hydrophilic agent lies in the range 0.3% to 3% by weight of the paste.

5. A negative electrode according to any preceding claim, in which the active material of the electrode is hydridable.

6. A negative electrode according to any preceding claim, in which the hydrophilic group is a carboxylic acid.

7. A negative electrode according to any preceding claim, in which the rods are of polyethylene or of polypropylene.

8. A negative electrode according to any preceding claim, in which the rods are of polypropylene.

9. A method of manufacturing an electrode for an alkaline cell, the method being characterized in that hydrophilic rods are made by oxidizing long polyolefin fibers having a mean diameter of less than 20 µm, with the rods being mixed with a paste including an active material, which mixture is applied to a current collector.

10. A method according to claim 9, characterized in that the active material is hydridable.

11. A method according to claim 9 or 10, characterized in that prior to oxidizing the fibers, at least one hydrophilic group is grafted thereon.

12. A method according to claim 11, in which said hydrophilic group is a carboxyl group or a sulfo group.
